**Europäisches Patentamt**

**European Patent Office**

**Office européen des brevets**

(19)

(11) Publication number : **0 500 325 A1**

# (12) EUROPEAN PATENT APPLICATION

(21) Application number : **92301328.8**

(22) Date of filing : **19.02.92**

(51) Int. Cl.$^5$ : **C03C 13/00,** C03C 3/078

(30) Priority : **19.02.91 JP 47547/91**

(43) Date of publication of application :
**26.08.92 Bulletin 92/35**

(84) Designated Contracting States :
**DE ES FR GB**

(71) Applicant : **NIPPON ELECTRIC GLASS COMPANY, LIMITED**
**7-1 Seiran 2-chome**
**Otsu-shi Shiga-ken (JP)**

(72) Inventor : **Kawamoto, Toru, c/o Nippon Elec. Glass Co., Ltd.**
**7-1, Seiran 2-chome**
**Otsu-shi, Shiga-ken (JP)**
Inventor : **Kokubo, Tadashi**
**50, Umegaoka 2-chome**
**Nagaokakyo-shi, Kyoto-fu (JP)**

(74) Representative : **Cropp, John Anthony David**
**MATHYS & SQUIRE 10 Fleet Street**
**London, EC4Y 1AY (GB)**

(54) Chemically resistant glass fiber composition.

(57)    A chemically resistant fiber glass composition consists essentially of, in molecular percentages : $SiO_2$ 46-70%, $TiO_2$ 5-18%, $ZrO_2$ 1-12% $TiO_2$ + $ZrO_2$ 12-25%, MgO 0-10%, CaO 0-18%, SrO 0-12%, BaO 4-15%, ZnO 0-10%, MgO+CaO+SrO+BaO+ZnO 12-35%, $Li_2O$ 0-10%, $Na_2O$ 1-10%, and $K_2O$ 0-10%, $Li_2O$+$Na_2O$+$K_2O$ 2-12%. The fiber glass composition contains $SiO_2$ as a high acid resistant element, $ZrO_2$ and $TiO_2$ as high alkali resistant elements by restricted particular amounts and, therefore, has an excellent chemical resistance although containing alkaline oxides such as $Na_2O$. Accordingly the glass composition can be used for reinforcement in FRP and GRC materials in common. Further, since the glass composition of the present invention also contains bivalent metal oxides such as BaO which enhance glass fiberizability, the glass can be readily fiberized or drawn into fibers.

EP 0 500 325 A1

Jouve, 18, rue Saint-Denis, 75001 PARIS

## Background of the Invention:

The present invention relates to glass fiber compositions having resistance against water, acid, and alkali, and in particular, to chemical resistant glass fiber compositions for use in anticorrosion materials or as reinforcement in fiber reinforced plastic (FRP) materials, glass fiber reinforced concrete (GRC) materials, asbesto alternate materials, battery separators and other composite materials.

As reinforcing glass fibers in FRP materials, so called E glass has been conventionally used which is a type of $SiO_2$-$B_2O_3$-$Al_2O_3$-$CaO$ glass as disclosed in U.S. Patent No. 2,334,961 by Schoenlaub assigned to Owens-Corning Fiberglas Corporation (Reference I).

Since E glass is readily attacked and eroded by alkali and acids although it has excellent water resistance and alkali elution, E glass cannot be used for reinforcement in GRC because it is attacked by alkaline elements in cement.

For GRC materials, zirconia containing fiber glass composition has been used which is a type of $SiO_2$-$ZrO_2$-$Na_2O$ glass as showm in U.S. Patent no. 3,861,926 by Irlam et al. assigned to Pilkington Brothers Limited (Reference II).

The zirconia containing fiber glass is excellent in alkali and acid resistance but is low in water resistance and large in alkali elution. Therefore, it cannot be used as reinforcement in FRP.

In the prior art, no fiber glass composition is known which can be used in common for reinforcement in FRP and GRC. It is desired from the economical view point that fiber glass compositions can be used as reinforcement in common for FRP and GRC materials.

In production of glass fibers, the molten glass is fed to a bushing having many nozzles in the bottom and is continuously drawn down through the nozzles as fibers. The above mentioned E glass and zirconia glass have high fiberizing temperatures ($T_F$) of 1250 °C or more. The fiberizing temperature is corresponding to the viscosity of $10^{2.5}$ poises required for production of glass fibers. Therefore, the bushing which is conventionally made of platinum alloy is deteriorated in use at such a high temperature. This results in requirement of replacing the bushing by a relatively short time period.

Accordingly, fiber glass compositions are desired to have lowered fiberizing temperatures ($T_F$) so as to reduce the production cost of glass fibers.

According to recent demand for reinforcing glass fibers, improved chemical resistance is desired for FRP materials and improved strength is desired for GRC materials.

## Description of the Invention:

Accordingly, it is an object of the present invention to provide an improved chemical resistant fiber glass composition which can used used in common as reinforcements for FRP and GRC materials.

It is another object of the present invention to provide the fiber glass composition having a comparatively low fiberizing temperature to thereby reduce deterioration of bushings in production of glass fibers.

It is a detailed object of the present invention to provide an improved chemical resistant fiber glass composition with a fiberizing temperature of 1200 °C or less which is excellent in acid resistance, alkali resistance, and water resistance.

According to the present invention, a chemical resistant fiber glass composition is obtained which consists essentially of, in molecular percentages: $SiO_2$ 46-70%, $TiO_2$ 5-18%, $ZrO_2$ 1-12% $TiO_2$+ $ZrO_2$ 12-25%, $MgO$ 0-10%, $CaO$ 0-18%, $SrO$ 0-12%, $BaO$ 4-15%, $ZnO$ 0-10%, $MgO$+$CaO$+$SrO$+$BaO$+$ZnO$ 12-35%, $Li_2O$ 0-10%, $Na_2O$ 1-10%, and $K_2O$ 0-10%, $Li_2O$+$Na_2O$+$K_2O$ 2-12%.

A preferable glass composition consists essentially of, in molecular percentages: $SiO_2$ 50-65%, $TiO_2$ 6-18%, $ZrO_2$ 2-10% $TiO_2$+ $ZrO_2$ 12-23%, $MgO$ 0-5%, $CaO$ 2-13%, $SrO$ 2-10%, $BaO$ 4-12%, $ZnO$ 0-5%, $MgO$+$CaO$+$SrO$+$BaO$+$ZnO$ 13-30%, $Li_2O$ 0-5%, $Na_2O$ 3-9.5%, and $K_2O$ 0-5%, $Li_2O$+$Na_2O$+$K_2O$ 3-11%.

The total amount of those ingredients in the glass composition is necessary 90% or more, As the balance, the glass composition may contain at least one element selected from $MnO$, $SnO$, $FeO$, $Fe_2O_3$, $Al_2O_3$, and $P_2O_5$.

The fiber glass composition according to the present invention contains $SiO_2$ as a high acid resistant element, $ZrO_2$ and $TiO_2$ as high alkali resistant elements by restricted particular amounts and, therefore, has an excellent chemical resistance although containing alkaline oxides such as $Na_2O$. Further, since the glass composition of the present invention also contains bivalent metal oxides such as $BaO$ which enhances glass fiberizability, the glass can be readily fiberized or drawn into fibers.

Now, a description will be made as to reasons why amounts of ingredients are restricted as described above.

The amount of $SiO_2$ is 46-70 mol%. Use of $SiO_2$ less than 46 mol% unadvantageously lowers the acid resistance and amount more than 70 mol% lowers the alkali resistance of the glass. The preferable amount of $SiO_2$

is 50-65 mol%.

The amount of $TiO_2$ is 5-18 mol%. When the amount is less than 5 mol%, the glass has the lower alkali resistance and the higher fiberizing temperature. Use of $TiO_2$ more than 18 mol% elevates the devitrification temperature ($T_L$) of the glass so that the temperature difference $\Delta T$ between $T_F$ and $T_L$ becomes lower. This results degradation of fiberizability of the glass. In detail, when $T_L$ is higher than $T_F$, devitrification tends to occur in the molten glass so that drawn fibers are broken at the nozzles in the bushing during production of glass fibers. It is required for glass fiberization that $T_L$ is lower than $T_F$, the larger difference therebetween enhances the glass fiberizability. The amount of $TiO_2$ is preferably 6-18 mol%.

The amount of $ZrO_2$ is 1-12 mol%. Amount less than 1 mol% results in lowered alkali resistance of the glass and amount more than 12 mol% lowers $\Delta T$ resulting in degraded glass fiberizability. A preferable amount of $ZrO_2$ is 2-10 mol%.

The total amount of $TiO_2$ and $ZrO_2$ is 12-25 mol% and preferably 12-23 mol%. The total amount less than 12 mol% results in lowered alkali resistance of the glass ant the total amount more than 25 mol% reduces $\Delta T$ resulting in degraded glass fiberizability.

MgO content is 0-10 mol% and is preferably 0-5 mol%. When MgO content is more than 10 mol%, $\Delta t$ is reduced to degrade the glass fiberizability.

CaO content is 0-18 mol% and is preferably 2-13 mol%. When CaO is contained more than 18 mol%, $\Delta T$ is reduced to degrade the glass fiberizability.

SrO content is 0-12 mol% and is preferably 2-10 mol%. When SrO is contained more than 12 mol%, $\Delta T$ is reduced to degrade the glass fiberizability.

BaO content is 4-15 mol% and is preferably 4-12 mol%. When BaO content is less than 4 mol% or more than 15 mol%, $\Delta T$ is reduced to degrade the glass fiberizability.

ZnO content is 0-10 mol% and is preferably 0-5 mol%. When ZnO is contained more than 10 mol%, $\Delta T$ is reduced to degrade the glass fiberizability.

When the total amount of MgO, CaO, BaO, SrO, and ZnO is less than 12 mol% and more than 35 mol%, $\Delta T$ is reduced to degrade the glass fiberizability.

$Li_2O$ content is 0-10 mol% and preferably 0-5 mol%. Content more than 10 mol% results in lowered water resistant of the glass so that the alkali elution is increased.

$Na_2O$ content is 1-10 mol%. When the content is less than 1 mol%, $\Delta T$ is reduced to degrade the glass fiberizability. More than 10 mol% content lowers the water resistance of the glass and increases the alkali elution. $Na_2O$ content is preferably 3-9.5 mol%.

Amount of $K_2O$ is 0-10 mol% and preferably 0-5 mol%. More than 10 mol% content lowers the water resistance of the glass and increases the alkali elution.

When $Li_2O+Na_2O+K_2O$ amount is less than 2 mol%, $\Delta t$ is reduced to degrade the glass fiberizability. But more than 12 mol% content lowers the water resistance of the glass and increases the alkali elution.

The additional elements of MnO, SnO, FeO, $Fe_2O_3$, $Al_2O_3$ and/or $P_2O_5$ should be 10 mol% or less. When it exceeds 10 mol%, glass fiberizability is degraded.

$B_2O_3$ and $F_2$ pollute the environment during production of the glass and should not be, therefore, included in the glass, preferably.

Examples:

Samples 1-23 in Tables 1-3 are ones according to the present invention, and comparative samples in Table 3 are conventional E glass and zirconia containing glass as described in the preamble of the present description.

Each of samples 1-23 and conventional samples was produced by: mixing raw materials to form a batch having each composition shown in the tables; melting the batch in a platinum crucible at a temperature of 1,500 °C for four hours; and pouring the molten glass on a iron plate to form a sample glass plate with a thickness of 5 mm.

Each sample was subjected to tests for measuring resistance to water, acid, and alkali, and alkali elution.

The water resistance test was performed by: grinding the sample glass plate to form glass particles having diameters ranging from 297 to 500 micron meters; accurately weighing the particles by an amount corresponding to the specific gravity grams; loading the weighed particles into a sealed teflon container containing pure water of 100 ml; and maintained in an autoclave at 180 °C for 10

Table 1

| Sample No.<br>Ingredients<br>(mol%) | Invention | | | | | | | |
|---|---|---|---|---|---|---|---|---|
| | 1 | 2 | 3 | 4 | 5 | 6 | 7 | 8 |
| $SiO_2$ | 50.0 | 48.0 | 47.6 | 49.6 | 65.0 | 53.0 | 49.0 | 50.0 |
| $TiO_2$ | 13.0 | 12.5 | 12.4 | 12.8 | 11.1 | 6.0 | 12.7 | 13.0 |
| $ZrO_2$ | 7.0 | 6.8 | 6.7 | 6.9 | 5.3 | 10.0 | 6.8 | 7.0 |
| MgO | 5.7 | – | – | – | – | – | – | – |
| CaO | – | 5.5 | 15.6 | 5.7 | 1.2 | 6.8 | 5.6 | 4.5 |
| SrO | 5.8 | 5.6 | – | 5.7 | 2.1 | 5.7 | 5.6 | 4.5 |
| BaO | 11.5 | 7.1 | 11.0 | 11.4 | 8.8 | 11.5 | 9.2 | 10.0 |
| ZnO | – | 7.7 | – | – | – | – | – | – |
| $Li_2O$ | – | – | – | 2.7 | – | – | – | – |
| $Na_2O$ | 7.0 | 6.8 | 6.7 | 4.4 | 6.5 | 7.0 | 6.8 | 7.0 |
| $K_2O$ | – | – | – | 0.8 | – | – | – | – |
| | | | | | | | MnO | $P_2O_5$ |
| | | | | | | | 4.3 | 4.0 |
| Water Resistance (%) | 0.15 | 0.10 | 0.10 | 0.10 | 0.05 | 0.13 | 0.11 | 0.12 |
| Alkali Elution (mg) | 0.03 | 0.03 | 0.03 | 0.02 | 0.01 | 0.03 | 0.03 | 0.03 |
| Acid Resistance (%) | 3.8 | 4.0 | 4.0 | 3.7 | 0.4 | 4.5 | 4.6 | 4.0 |
| Alkali Resistance (%) | 0.2 | 0.2 | 0.2 | 0.2 | 0.6 | 0.2 | 0.2 | 0.5 |
| $T_F(^{\circ}C)$ | 1130 | 1085 | 1080 | 1130 | 1170 | 1150 | 1085 | 1100 |
| $T_L(^{\circ}C)$ | 1080 | 1040 | 1040 | 1080 | 1000 | 1100 | 1040 | 1050 |
| $\Delta T(^{\circ}C)$ | 50 | 45 | 40 | 50 | 170 | 50 | 45 | 50 |

Table 2

| Sample No. Ingredients (mol%) | Invention | | | | | | | | |
|---|---|---|---|---|---|---|---|---|---|
| | 9 | 10 | 11 | 12 | 13 | 14 | 15 | 16 | 17 |
| $SiO_2$ | 53.6 | 62.4 | 51.2 | 50.6 | 53.0 | 50.0 | 50.0 | 58.0 | 57.5 |
| $TiO_2$ | 12.5 | 12.2 | 12.5 | 12.8 | 6.0 | 12.7 | 13.0 | 7.0 | 10.0 |
| $ZrO_2$ | 6.8 | 5.3 | 6.8 | 5.9 | 10.0 | 5.8 | 7.0 | 5.0 | 3.0 |
| $MgO$ | – | – | – | – | – | – | – | – | 3.0 |
| $CaO$ | 5.6 | 2.7 | 5.5 | 5.7 | 6.8 | 5.6 | 4.5 | 5.7 | 6.2 |
| $SrO$ | 5.6 | 2.1 | 5.6 | 5.7 | 5.7 | 5.6 | 4.5 | 5.8 | 6.3 |
| $BaO$ | 9.1 | 8.8 | 7.1 | 11.4 | 11.5 | 9.2 | 10.0 | 11.5 | 7.0 |
| $ZnO$ | – | – | 4.5 | – | – | – | – | – | – |
| $Li_2O$ | – | – | – | 2.7 | – | – | – | – | – |
| $Na_2O$ | 6.8 | 6.5 | 6.8 | 4.4 | 7.0 | 6.8 | 7.0 | 7.0 | 7.0 |
| $K_2O$ | – | – | – | 0.8 | – | – | – | – | – |
| | | | | | | MnO 4.3 | $P_2O_5$ 4.0 | | |
| Water Resistance (%) | 0.07 | 0.05 | 0.10 | 0.10 | 0.13 | 0.11 | 0.12 | 0.15 | 0.15 |
| Alkali Elution (mg) | 0.04 | 0.01 | 0.03 | 0.02 | 0.03 | 0.03 | 0.03 | 0.05 | 0.05 |
| Acid Resistance (%) | 1.8 | 0.6 | 4.0 | 3.7 | 4.5 | 4.6 | 4.0 | 0.6 | 0.6 |
| Alkali Resistance (%) | 0.3 | 0.5 | 0.2 | 0.2 | 0.2 | 0.2 | 0.5 | 0.5 | 0.7 |
| $T_F$ (°C) | 1150 | 1190 | 1140 | 1150 | 1150 | 1140 | 1145 | 1170 | 1151 |
| $T_L$ (°C) | 1100 | 1080 | 1100 | 1100 | 1080 | 1050 | 1090 | 1070 | 1024 |
| $\Delta T$ (°C) | 50 | 110 | 40 | 50 | 70 | 90 | 55 | 100 | 127 |

Table 3

| Sample No. Ingredients (mol%) | Invention | | | | | | | |
|---|---|---|---|---|---|---|---|---|
| | 18 | 19 | 20 | 21 | 22 | 23 | E glass | Zirconia Containing glass |
| $SiO_2$ | 55.5 | 52.5 | 54.0 | 54.5 | 52.5 | 52.5 | 58.1 | 67.6 |
| $TiO_2$ | 15.0 | 18.0 | 7.0 | 13.0 | 14.0 | 14.0 | 0.2 | 1.7 |
| $ZrO_2$ | 3.0 | 3.0 | 7.0 | 6.0 | 6.0 | 6.0 | - | 10.6 |
| MgO | - | - | - | - | - | - | 1.3 | - |
| CaO | 6.2 | 6.2 | 5.7 | 7.2 | 5.7 | 5.7 | 24.2 | 0.6 |
| SrO | 6.3 | 6.3 | 5.8 | 7.3 | 5.8 | 5.8 | 0.1 | - |
| BaO | 7.0 | 7.0 | 11.5 | 5.0 | 9,0 | 9.0 | - | - |
| ZnO | - | - | - | - | - | - | - | - |
| $Li_2O$ | - | - | - | - | - | - | - | 2.7 |
| $Na_2O$ | 7.0 | 7.0 | 9.0 | 7.0 | 6.0 | 4.0 | 0.3 | 15.1 |
| $K_2O$ | - | - | - | - | 1.0 | 3.0 | 0.1 | 1.7 |
| | | | | | | | $B_2O_3$ 7.1 $Al_2O_3$ 8.6 | |
| Water Resistance(%) | 0.12 | 0.10 | 0.15 | 0.10 | 0.20 | 0.20 | 0.4 | 0.6 |
| Alkali Elution(mg) | 0.05 | 0.05 | 0.07 | 0.03 | 0.03 | 0.03 | 0.01 | 0.3 |
| Acid Resistance(%) | 1.1 | 2.3 | 1.8 | 1.8 | 2.2 | 2.2 | 37.0 | 0.5 |
| Alkali Resistance(%) | 0.6 | 0.6 | 0.3 | 0.4 | 0.3 | 0.4 | 6.0 | 0.6 |
| $T_F(^oC)$ | 1145 | 1140 | 1140 | 1150 | 1140 | 1150 | 1275 | 1370 |
| $T_L(^oC)$ | 1010 | 1040 | 1080 | 1100 | 1090 | 1080 | 1060 | 1100 |
| $\Delta T(^oC)$ | 135 | 100 | 60 | 50 | 50 | 70 | 215 | 270 |

hours. Then the particles were taken out from the container and dried. The amount of the particles were weighed and calculation wras performed as regards the weight reduction of the glass particles before and after the test. It should be noted that the smaller weight reduction is the better water resistance. The weight reduction is shown as the water resistance in the tables.

Alkali elution test was performed according to the JIS (Japanese Industrial Standard) R 3502-1987. Measured eluted alkali amount is shown in the tables.

The acid resistant test was carried out by: accurately weighing the glass particles by an amount corresponding to the specific gravity grams in the similar manner in the water resistant test; soaking the weighed particles in 10% HCl solution of 100 milliliters (ml); and shaking out at 80 °C for 96 hours. Then, the particles were similarly weighed and calculation was carried out to obtain the weight reduction before and after the acid resistant test. The smaller weight reduction indicates the better acid resistance. The measured weight reduction is shown as the acid resistance in the tables.

In the similar manner, the glass particles were weighed by the amount corresponding to the specific gravity grams. For the alkali resistant test, the weighed glass particles were soaked in the 10% NaOH solution of 100 ml and were shaked out at 80 °C for 16 hours. Then, the weight reduction was measured before and after the test. The smaller weight reduction is better in the alkali resistance. The weight reduction is shown as the alkali resistance in the tables.

The fiberizing temperature $T_F$ of each sample glass was measured by the known platinum ball pulling up method. The devitrification temperature $T_L$ of each sample glass was also measured by: heating the glass particles in a platinum boat in a furnace with a known temperature gradient for 16 hours; and obtaining the temperature of the glass at the boundary between crystals and glass. Those measured $T_F$ and $T_L$ are also shown in the tables.

It will be understood from the tables that the glass compositions of the present invention are superior to the comparative E glass in the acid resistance and the alkali resistance, and also superior to the other comparative zirconia containing glass in the water resistance and the alkali elution. Accordingly, the glass compositions of the present invention will be understood to be generally excellent in the alkali resistance, the acid resistance and the water resistance.

The glass compositions according to the present invention have $T_F$ sufficiently higher than $T_L$ or $\Delta T$ more than 40 °C. Therefore, the glasses of the present invention can be fiberized and can reduce the deterioration of the bushing in production of glass fibers because the glasses of the present invention have $T_F$ lower than the comparative sample glasses.

Each sample glass according to the present invention was melted in the platinum alloy bushing heated electrically. The molten glass could be continuously drawn into fibers by setting the nozzle temperature for the glass viscosity of $10^{2.5}$ poises.

## Claims

1. A chemically resistant fiber glass composition which consists essentially of, in molecular percentages: $SiO_2$ 46-70%, $TiO_2$ 5-18%, $ZrO_2$ 1-12% $TiO_2$+ $ZrO_2$ 12-25%, MgO 0-10%, CaO 0-18%, SrO 0-12%, BaO 4-15%, ZnO 0-10%, MgO+CaO+SrO+BaO+ZnO 12-35%, $Li_2O$ 0-10%, $Na_2O$ 1-10%, and $K_2O$ 0-10%, $Li_2O+Na_2O+K_2O$ 2-12%.

2. A glass composition as claimed in Claim 1, wherein the total amount of those ingredients in the glass composition is at least 90 mole %.

3. A glass composition as claimed in claim 2, which contains up to 10 mole % of at least one oxide. selected from MnO, SnO, FeO, $Fe_2O_3$, $Al_2O_3$, and $P_2O_5$.

4. A glass composition as claimed in claim 1, claim 2 or claim 3 which consists essentially of, in molecular percentages: $SiO_2$ 50-65%, $TiO_2$ 6-18%, $ZrO_2$ 2-10% $TiO_2$+ $ZrO_2$ 12-23%, MgO 0-5%, CaO 2-13%, SrO 2-10%, BaO 4-12%, ZnO 0-5%, MgO+CaO+SrO+BaO+ZnO 13-30%, $Li_2O$ 0-5%, $Na_2O$ 3-9.5%, and $K_2O$ 0-5%, $Li_2O+Na_2O+K_2O$ 3-11%.

**European Patent Office**

# EUROPEAN SEARCH REPORT

Application Number

EP 92 30 1328

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | WORLD PATENTS INDEX LATEST Section Ch, Week 8320, Derwent Publications Ltd., London, GB; Class A, AN 83-48082K & JP-A-58 060 641 (NIPPON ELECTRIC GLASS) 11 April 1983 * abstract * | 1-4 | C03C13/00 C03C3/078 |
| X | FR-A-2 375 149 (OWENS-CORNING FIBERGLASS CORPORATION) * page 4, line 38 - page 5, line 19 * | 1 | |
| A | US-E-29 388 (ATKINSON) * claims * | 1-4 | |
| A | CHEMICAL ABSTRACTS, vol. 1106, no. 20, May 1987, Columbus, Ohio, US; abstract no. 161407K, page 323 ; * abstract * & CS-A-236 744 (M.VANIS ET AL.) 15 November 1986 | 1-4 | TECHNICAL FIELDS SEARCHED (Int. Cl.5) |
| A | US-A-3 840 379 (WOLF) * claims * | 1-4 | C03C |

The present search report has been drawn up for all claims

| Place of search | Date of completion of the search | Examiner |
|---|---|---|
| THE HAGUE | 18 MAY 1992 | VAN BOMMEL L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

  & : member of the same patent family, corresponding document

EPO FORM 1500 03.82 (P0401)